Europäisches Patentamt

European Patent Office

(11) Veröffentlichungsnummer: **0 241 897**
**B1**

Office européen des brevets

(12) **EUROPÄISCHE PATENTSCHRIFT**

(45) Veröffentlichungstag der Patentschrift:
28.02.90

(21) Anmeldenummer: **87105458.1**

(22) Anmeldetag: **13.04.87**

(51) Int. Cl. ⁵: **B 01 D 46/04**

(54) Vorrichtung zum Reinigen von Filtern.

(30) Priorität: 18.04.86 DE 8610694 U

(43) Veröffentlichungstag der Anmeldung:
21.10.87 Patentblatt 87/43

(45) Bekanntmachung des Hinweises auf die Patenterteilung:
28.02.90 Patentblatt 90/09

(84) Benannte Vertragsstaaten:
AT BE CH DE ES FR GB GR IT LI LU NL SE

(56) Entgegenhaltungen:
DE-A-2 242 659
DE-A-2 405 344
FR-A-2 270 505
FR-A-2 391 759
GB-A-2 095 127
US-A-4 158 554

(73) Patentinhaber: AVK Filtertechnik GmbH
Industriestrasse 1
D-6467 Hasselroth (DE)

(72) Erfinder: Esch, Hans Wilhelm
Eidengesässer Strasse 30
D-6464 Altenhesslau (DE)
Erfinder: Hoenigs, Michael
Im Hessenring 38
D-6365 Rosbach (DE)

(74) Vertreter: Stoffregen, Hans-Herbert, Dr. Dipl.-Phys.
Patentanwälte Strasse & Stoffregen Salzstrasse 11a
Postfach 2144
D-6450 Hanau/Main 1 (DE)

LIBERGRAF, STOCKHOLM 1990

EP 0 241 897 B1

## Beschreibung

Die Erfindung bezieht sich auf eine Vorrichtung zum Reinigen von Filtern mit zwei über dem Filter verschiebbar angeordneten, Öffnungen wie Düsen aufweisenden Balken, die von einem mit einem Fluid wie Druckluft beaufschlagbaren Zylinder ausgeht, der entlang einer die Stirnflächen des Zylinders durchsetzenden Kolbenstange verschiebbar ist, die eine stationär angeordnete den Zylinderinnenraum in zwei Kammern unterteilende Trennwand aufweist.

Bei Filteranlagen mit z. B. Schwebstofffilterkörpern ist es erforderlich, daß die Filterkörper von Zeit zu Zeit gereinigt werden. Dabei werden sogenannte Düsenbalken über die zu reinigenden Schwebstofffilterkörper verfahren, um über in den Düsenbalken vorhandene Düsen Druckluft entgegen dem Strömungsweg des zu reinigenden Gases abströmen zu lassen. Damit die erforderliche Druckluft von den Düsenbalken abgegeben werden kann und gleichzeitig ein Verfahren des den Düsenbalken haltenden Zylinders möglich ist, sind flexible Zuleitungen zum Düsenbalken und separate Zuleitungen zum Zylinder vorgesehen, die mit der erforderlichen Druckluft beaufschlagt werden. Die flexiblen Zuleitungen bedingen jedoch eine Störanfälligkeit, insbesondere dann, wenn die zu reinigenden Gase höhere Temperatur aufweisen. Ferner ist es erforderlich, daß der Zylinder entlang einer Führung verschoben wird, um eine Verdrehsicherung zu gewährleisten. Ansonsten hat die Führung keine weitere Funktion.

Aufgabe der vorliegenden Erfindung ist es, eine Vorrichtung der eingangs genannten Art so auszubilden, daß ohne flexible Zuleitungen ein problemloses Betätigen des den Düsenbalken aufweisenden Zylinders möglich ist.

Die Aufgabe wird erfindungsgemäß dadurch gelöst, daß zur Versorgung der Kammern mit dem Fluid die Kolbenstange zum Durchströmen des Fluids abschnittsweise hohl ausgebildet ist, daß jeder Kammer ein hohl ausgebildeter Abschnitt der Kolbenstange zugeordnet ist und zu der Kammer führende Verbindungen aufweist, daß jede Kammer mit einem der Balken verbunden ist und daß das Fluid abwechselnd einem der Abschnitte der Kolbenstange zum Verschieben des Zylinders und zum Versorgen des Balkens mit dem Fluid zuführbar ist.

Erfindungsgemäß wird demzufolge die Fluid- wie Druckluftzuführung über die Kolbenstange erfolgen, so daß flexible Zuleitungen nicht erforderlich sind. So wird die Druckluft von den Stirnbereichen der Kolbenstange in diese eingeführt, um so den Zylinder zu verschieben und den Düsenbalken mit Druckluft zu versorgen. Der Antrieb des Zylinders und das Reinigen des Filters erfolgt über ein und dieselbe Druckluft. Dabei ist grundsätzlich jeweils ein Düsenbalken am jeweiligen Ende des Zylinders angeordnet, um entlang des gesamten Verschiebeweges des Zylinders bei Vor- und Rücklauf jeweils eine Filterhälfte abreinigen zu können (bzw. bei Doppel-Anordnung jeweils einen Filter). Vorzugsweise entspricht also der Hubweg des Zylinders der halben Filterbreite bzw. bei Doppel-Anordnung einer ganzen Filterbreite.

Nach einer besonders hervorzuhebenden eigenständigen Lösung der Erfindung ist parallel zur Kolbenstange ein hohl ausgebildetes den Zylinder verdrehsicher führendes Element angeordnet, dessen mit dem Fluid beaufschlagbarer Hohlraum mit einem der hohl ausgebildeten Abschnitte der Kolbenstange verbunden ist. Durch diesen Vorschlag ist zum einen mit funktionell einfachen Mitteln eine Verdrehsicherung gewährleistet und zum anderen braucht die Druckluftzufuhr nur von einer Seite der Vorrichtung zu erfolgen, also z. B. über ein Halteelement, das in einem Stirnbereich der Kolbenstange angeordnet ist. Hierdurch ist die Zuführung des Fluids besonders einfach. Das Halteelement läßt sich z. B. so ausbilden, daß das für die Steuerung der Druckluft erforderliche Ventil direkt angeflanscht wird. Im gegenüberliegenden Stirnbereich der Kolbenstange ist sodann in einer entsprechend vorgesehenen Halteeinrichtung eine Verbindung zwischen dem hohl ausgebildeten Führungselement wie Rohr und dem entsprechenden hohl ausgebildeten Kolbenstangenabschnitt gegeben. Je nach Bewegungsrichtung des Zylinders wird nun entweder einer der hohl ausgebildeten Abschnitte der Kolbenstange unmittelbar mit Druckluft beaufschlagt oder der andere Abschnitt, nachdem die Druckluft durch das hohl ausgebildete Führungselement geströmt ist.

Nach einer Ausgestaltung der Erfindung besteht die Kolbenstange aus zwei Rohrabschnitten, die über einen Vollzylinderabschnitt verbunden sind, der in die mit der Innenwandung des Zylinders wechselwirkenden Trennwand übergeht. Hierdurch ist eine besonders einfache Konstruktion der Vorrichtung gegeben, die eine hohe Funktionstüchtigkeit und Wartungsfreundlichkeit gewährleistet.

Nach einer weiteren Ausgestaltung der Erfindung ist in der Verbindung zwischen Zylinderkammer und Düsenbalken jeweils ein die Verbindung freigebendes bzw. sperrendes Element, wie z. B. Stößelventil, angeordnet. Dabei wirken die Stößelventile mit Begrenzungselementen derart zusammen, daß diejenige Zylinderkammer, die mit Druckluft beaufschlagt ist, dann abgesperrt wird, wenn der Zylinder die der Hubrichtung entsprechende Endlage erreicht hat, wobei gleichzeitig das andere Stößelventil geöffnet wird. Dabei sind die Ventilstößel zweckmäßigerweise mechanisch miteinander gekoppelt.

Durch diese Anordnung wird zweierlei erreicht:

Erstens wird der Druckluftstrom abgesperrt, sobald die Endlage erreicht ist, ohne daß zusätzliche Endlagenschalter erforderlich sind und ohne daß die Druckluft von außen abgeschaltet werden muß.

Zweitens muß die Verbindung von der nicht mit Druckluft beaufschlagten Zylinderkammer zum Düsenbalken während der Hubbewegung abgesperrt sein, damit eine Geschwindigkeitssteuerung durch Abluftdrosselung möglich ist. Die noch vom vorherigen Hub in der Zylinderkammer enthaltene Druckluft wird dabei über die Zuführleitungen und ein Drosselventil verdrängt.

Ferner ist - wie es nach dem Stand der Technik bereits bekannt ist - zusätzlich die Möglichkeit gegeben, die Bewegung des Zylinders durch Öldruckdämpfer oder Drosselventile zu steuern, um also die Geschwindigkeit im gewünschten Umfang einstellen bzw. regulieren zu können.

Durch die erfindungsgemäße Lehre wird erstmals eine Vorrichtung zum Reinigen von insbesondere Filtern zur Verfügung gestellt, die keiner flexiblen Zuleitung bedarf, die mit beweglichen Elementen wie dem Zylinder oder dem Düsenbalken verbunden sind, wie es nach dem Stand der Technik wie z. B. der DE-PS-2 262 084 der Fall ist.

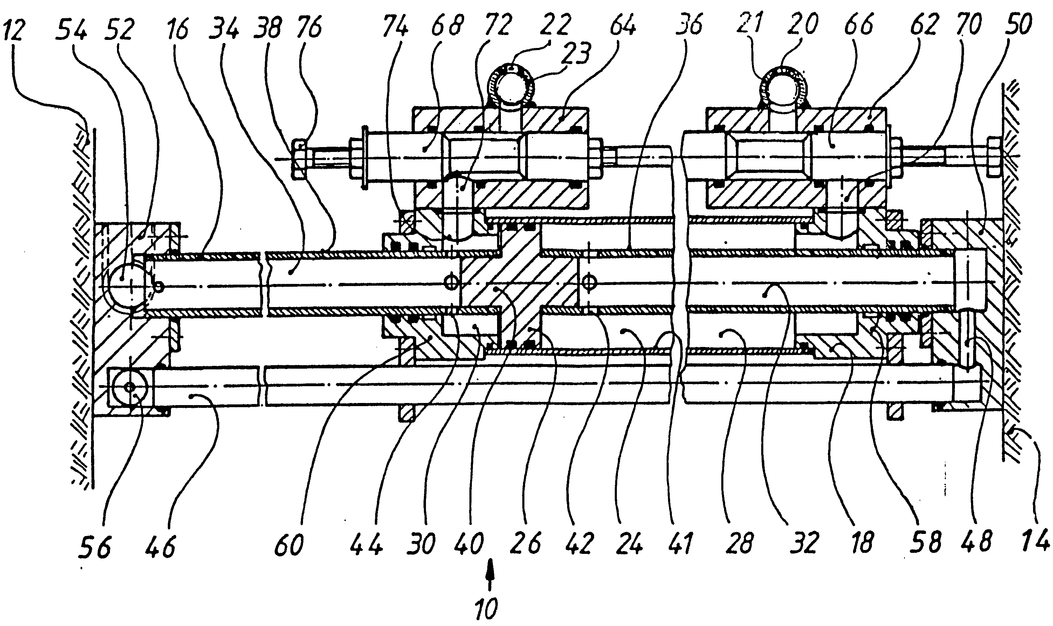

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines in der Zeichnung dargestellten bevorzugten Ausführungsbeispiels.

In der einzigen Figur ist eine zwischen zwei Begrenzungen wie Wandungen (12) und (14) verschiebbare Vorrichtung (10) zum Reinigen von insbesondere Filtern dargestellt, die einen entlang einer Kolbenstange (16) verschiebbaren Zylinder (18) umfaßt. Von dem Zylinder werden Öffnungen oder Düsen (20), (22) von Düsenbalken (21) und (23) mit Druckluft versorgt. Die Druckluft wird über einen der Düsenbalken (21) oder (23) auf ein nicht dargestelltes Filter abgegeben, um dieses zu reinigen. Die Öffnungen (20) und (22) der Düsenbalken (21) und (23), deren Längsachsen senkrecht zu der der Kolbenstange (16) verlaufen, sind im Bereich der Stirnflächen (58) und (60) des Zylinders (18) angeordnet, um Druckluft über den gesamten Bewegungsweg abstrahlen zu können. Der Zylinderinnenraum (24) ist durch eine Trennwand (26) in zwei Kammern (28) und (30) unterteilt, um so in Abhängigkeit von der zugeführten Druckluft eine Bewegung nach links bzw. rechts entlang der Kolbenstange (16) zu ermöglichen. Die Druckluft selbst wird in die Kammern (28) und (30) über die hohl ausgebildete Kolbenstange (16) geführt, wobei jeder Kammer (28) bzw. (30) ein hohl ausgebildeter Kolbenabschnitt (32) bzw. (34) zugeordnet ist. Dabei kann die Kolbenstange (16) vorzugsweise aus zwei Rohrabschnitten (36) und (38) zusammengesetzt sein, die über einen Vollzylinderabschnitt (40) verbunden sind, der seinerseits in die Trennwand (26) übergeht, die gegenüber der Innenwandung (41) abgedichtet ist. Hierdurch ist eine wirksame Trennung zwischen den hohl ausgebildeten Kolbenabschnitten (32) und (34) gegeben. Im Bereich der Trennwand (26) sind Öffnungen (42) bzw. (44) in der Wandung der Kolbenstange (16) eingelassen, um eine Verbindungen zwischen dem hohl ausgebildeten Abschnitt (34) und der Kammer (30) bzw. dem Abschnitt (32) und der Kammer (28) zu ermöglichen.

Parallel zu der Kolbenstange (16) verläuft ein Führungsrohr (46), das erfindungsgemäß ebenfalls hohl ausgebildet ist und über das Druckluft strömen kann. Die Verbindung zwischen dem Führungsrohr (46) und dem hohl ausgebildeten Abschnitt (32) der Kolbenstange (16) erfolgt nun über einen Kanal (48), der im Ausführungsbeispiel in einem Halteelement (50) verläuft, der die rechten Enden der Kolbenstange (16) bzw. des Führungsrohrs (46) aufnimmt. Das Halteelement (50) geht von der Wandung (14) aus. Die gegenüberliegenden Stirnbereiche werden von einem weiteren Halteelement (52) aufgenommen, in dem Bohrungen (54) und (56) eingelassen sind, die wahlweise mit einer nicht dargestellten Druckluftquelle verbunden sind.

Im Bereich der Stirnflächen (58) bzw. (60) des Zylinders (18) gehen Anschlüsse (62) bzw. (64) aus, die in den Düsenbalken (21) und (23) münden. Die Anschlüsse (62) und (64) sind vorzugsweise als Stößelventile ausgebildet, um wahlweise die Düsen (20) bzw. (22) von Druckluft durchströmen zu lassen oder nicht. Dies hängt davon ab, welche Bewegungsrichtung der Zylinder (18) einnimmt. Die die Düsen (20) bzw. (22) freigebenden bzw. sperrenden Stößel (66) und (68) wirken im Ausführungsbeispiel mit den Begrenzungswandungen (14) und (12) und untereinander zusammen, um so in Abhängigkeit von der Stellung des Zylinders (18) den den Öffnungen (20) und (22) zugeordneten Düsenbalken mit Druckluft zu beaufschlagen oder nicht, und um an der gegenüberliegenden Zylinderkammer die Abluft steuern zu können.

Die erfindungsgemäße Vorrichtung (10) arbeitet nun wie folgt. Im Ausführungsbeispiel befindet sich der Zylinder (18) in seiner rechten Endstellung. Hierdurch bedingt ist der Stößel (66) nach links verschoben, so daß die von der Kammer (24) ausgehende Öffnung (70) verschlossen ist. Demzufolge kann die in der Kammer (28) anstehende Druckluft nicht zur Öffnung (20) des Düsenbalkens (21) gelangen. Gleichzeitig ist die Öffnung (72), die von der Kammer (30) ausgeht, vom Stößel (68) freigegeben, so daß die Kammer (30) vollständig entlüftet ist. Zum Starten des Reinigungsvorganges wird Druckluft über die Bohrung (54) in den hohl ausgebildeten Abschnitt (34) der Kolbenstange (16) geleitet und strömt nun über die Öffnung (44) in die Kammer (30), um die innenliegende Stirnwandung (74) zu beaufschlagen. Gleichzeitig entweicht die Druckluft aus der Kammer (28) über Öffnung (42), Rohrabschnitt (32), Kanal (48), Führungsrohr (46), Bohrung (56) und ein hier nicht dargestelltes Drosselventil. Hierdurch bedingt bewegt sich der Zylinder (18) nach links. Gleichzeitig strömt Druckluft über die Öffnung (72) und das Stößelventil (64) zur Öffnung (22) des Düsenbalkens (23). Daß die durch die Kammer (30) strömende Druckluft gleichzeitig die Bewegung des Zylinders (18) nach links bewirkt, liegt darin begründet, daß die Auslässe (72) und (22) einen Strömungswiderstand bilden, so daß ein Druckaufbau in der Kammer (30) des Zylinders (18) erfolgt. Sobald der Zylinder (18) in die linke Endstellung gelangt, wirkt ein äußerer Abschnitt (76) des Stößels (68) mit der Wandung (12) zusammen. Hierdurch bedingt verschiebt sich der Stößel (68) nach rechts, so daß die Öffnung (72) verschlossen wird. Gleichzeitig wird der Stößel (66) des Stößelventils (62) nach rechts verschoben, wodurch die Öffnung (70) freigegeben wird. Der Zylinder kann nun umgesteuert werden, indem die Druckluft nicht mehr über die Bohrung (54) sondern über die Bohrung (56) zum Zylinderabschnitt (28) geleitet wird.

Ist im Ausführungsbeispiel die Druckluftzufuhr von der linken Seite über die Bohrungen (54) und (56) der Vorrichtung (10) dargestellt, so kann selbstverständlich auch von der gegenüberliegenden Seite, also von der Halterung (50) aus die Druckluftzufuhr erfolgen. Entsprechend müßte dann eine Verbindung zwischen den Bohrungen (54) und (56) bestehen, wohingegen der Kanal (48) unterbunden ist. Auch besteht die Möglichkeit, daß die Druckluft nicht über das Führungsrohr (46) strömt, vielmehr die hohl ausgebildeten Abschnitte (32) und (34) der Kolbenstange (16) jeweils von ihren Stirnenden aus mit Druckluft beaufschlagt zu werden. Auch bei einer entsprechenden Konstruktion sind keine flexiblen Zuleitungen erforderlich, die mit dem sich bewegenden Zylinder (18) verbunden sind.

Schließlich ist zu bemerken, daß die verwendete Druckluft einen Druck von 6 bar aufweisen kann, wobei ein Partialdruck von 2 - 3 bar zum Verschieben des Zylinders (18) benutzt werden kann.

**Patentansprüche**

1. Vorrichtung (10) zum Reinigen von Filtern mit zwei über dem Filter verschiebbar angeordneten, Öffnungen wie Düsen (20, 22) aufweisenden Balken (21, 23), die von einem mit einem Fluid wie Druckluft beaufschlagbaren Zylinder (18) ausgehen, der entlang einer die Stirnflächen des Zylinders durchsetzenden Kolbenstange (16) verschiebbar ist, die eine stationär angeordnete den Zylinderinnenraum in zwei Kammern (28, 30) unterteilende Trennwand (26) aufweist, *dadurch gekennzeichnet*, daß zur Versorgung der Kammern (28, 30) mit dem Fluid die Kolbenstange (16) zum Durchströmen des Fluids abschnittsweise hohl ausgebildet ist, daß jeder Kammer ein hohl ausgebildeter Abschnitt (32, 34) der Kolbenstange zugeordnet ist und zu der Kammer führende Verbindungen (42, 44) aufweist, daß jede Kammer (28, 30) mit einem der Balken (21, 23) verbunden ist und daß das Fluid abwechselnd einem der Abschnitte der Kolbenstange zum Verschieben des Zylinders und zum Versorgen des Balkens mit dem Fluid zuführbar ist.

2. Vorichtung nach Anspruch 1, *dadurch gekennzeichnet*, daß parallel zur Kolbenstange (16) ein hohl ausgebildetes den Zylinder verdrehsicher führendes Element (46) verläuft, dessen mit dem Fluid beaufschlagbarer Hohlraum mit einem der hohl ausgebildeten Abschnitte (32) der Kolbenstange (16) verbunden ist.

3. Vorrichtung nach Anspruch 1, *dadurch gekennzeichnet*, daß die Kolbenstange (16) aus zwei Rohrabschnitten (32, 34) besteht, die über einen Vollzylinderabschnitt (40) verbunden sind, der in die an der Innenwandung (41) des Zylinders (18) dichtend anliegende Trennwand (26) übergeht.

4. Vorrichtung nach Anspruch 1, *dadurch gekennzeichnet*, daß die in der Wandung der Kolbenstange (16) eingelassenen Verbindungen (42, 44) im Bereich des Vollzylinderabschnitts (40) angeordnet sind.

5. Vorrichtung nach Anspruch 2, *dadurch gekennzeichnet*, daß das Element (46) ein Rohr ist, das von die Kolbenstange (16) aufnehmenden Halteelementen (50, 52) ausgeht.

6. Vorrichtung nach Anspruch 1, *dadurch gekennzeichnet*, daß von jeder Kammer (28, 30) ein Düsenbalken (21, 23) ausgeht, wobei zwischen dem Balken und der Kammer ein die Druckluft freigebendes oder sperrendes Element (62, 64) wie Stößelventil angeordnet ist.

7. Vorrichtung nach Anspruch 6, *dadurch gekennzeichnet*, daß die Stößel (66, 68) der Ventile mechanisch miteinander gekoppelt sind.

8. Vorrichtung nach Anspruch 5, *dadurch gekennzeichnet*, daß in einem Halteelement (50) eine das Fluid führende Verbindung (48) zwischen dem vorzugsweise als Rohr (46) ausgebildeten den Zylinder (18) führenden Element und dem hohl ausgebildeten Abschnitt (32) der Kolbenstange (16) verläuft.

**Claims**

1. Apparatus (10) for cleaning filters comprising two bars (21, 23) movable arranged over a filter having openings like nozzles (20, 22), said bars emanating from a cylinder (18) feedable with fluid like compressed air and mowable arranged along a piston rod (16) penetrating facing walls of said cylinder, said piston rod having a fixed partition wall (26) dividing the cylinder interior (24) into two chambers (28, 30), *characterized in*, that for feeding the chambers (28, 30) with the fluid the piston rod (16) has hollow sections, that each of the chambers is related to one of the hollow sections (32, 34) and is connected therewith, that each of the chambers connected with one of the bars (21, 23) and that the fluid is alternately feedable to one of the hollow sections of the piston rod effecting both the motion of the cylinder and the feeding of the bar with the fluid.

7

2. Apparatus according to claim 1, *characterized in*, that a hollow shaped element (46) runs parallel to the piston rod (16) securing it against turning, whereby the element can be flowed by the fluid and is connected to one of sections (32) of the hollow piston rod (16).

3. Apparatus according to claim 1, *characterized in*, that the piston rod (16) comprises two tube sections (32, 34) connected by a solid cylinder section a part of which is the partition wall (26), which is in sealing contact with the inner wall (41) of the cylinder (18).

4. Apparatus according to claim 1, *characterized in*, that the connections (42, 44) embedded in the wall of the piston rod (16) are arranged in the region of the solid cylinder section (40).

5. Apparatus according to claim 2, *characterized in*, that the element (46) is a tube, which starts from holding elements (50, 52) carrying the piston rod (16).

6. Apparatus according to claim 1, *characterized in*, that one of the nozzle bars (21, 23) starts from each of the chambers (28, 30), whereby an element (62, 64) as tappet valve for releasing or closing the pressured air is arranged between the bar and the chamber.

7. Apparatus according to claim 6, *characterized in*, that the tappets (66, 68) of the valves are mechanically coupled.

8. Apparatus according to claim 5, *characterized in*, that in a holding element (50) a fluid connection (48) runs between the element guiding the cylinder (18) and the hollow section (32) of the piston rod (16), whereby the guiding element could be formed as a tube.

## Revendications

1. Dispositif (10) destiné au nettoyage de filtres à l'aide de deux barres déplaçables (21, 23) disposées au-dessus du filtre et présentant des orifices telles que buses (20, 22), barres qui partent d'un vérin (18) alimenté par un fluide tel que de l'air comprimé, celui-ci se déplaçant le long d'une tige de piston (16) traversant l'une des faces frontales du vérin, tige de piston qui présente une paroi de séparation (26) stationnaire séparant l'intérieur du vérin en deux chambres (28, 30), *caractérisé en ce que*, pour l'alimentation des chambres (28, 30) en fluide, la tige de piston (16) présente, par sections, des cavités destinées au passage du fluide, de telle manière qu'à chaque chambre soit affectée une section (32, 34) à cavité et présente des raccords (42, 44) menant à la chambre, que chaque chambre (28, 30) soit reliée à l'une des barres (21, 23) et que le fluide soit, en alternance, acheminable à l'une des sections de la tige de piston pour le déplacement du vérin et pour l'ali-

8

mentation de la barre en fluide.

2. Dispositif d'après la revendication n° 1, *caractérisé en ce que* un élément (46) creux guidant le vérin, tout en empêchant toute déformation, suit un tracé parallèle à la tige de piston (16), élément dont la cavité alimentée en fluide est reliée à l'une des sections creuses (32) de la tige de piston (16).

3. Dispositif d'après la revendication n° 1, *caractérisé en ce que* la tige de piston (16) se compose de deux sections de tube (32, 34) reliées par une section de vérin pleine (40), section qui s'engage dans la paroi de séparation (26) appliquée, avec effet d'étanchéité, contre la paroi intérieure (41) du vérin (18).

4. Dispositif d'après la revendication n° 1, *caractérisé en ce que* les raccords (42, 44) pénétrant dans la paroi de la tige de piston (16) sont disposés dans la zone de la section pleine du vérin (40).

5. Dispositif d'après la revendication n° 2, *caractérisé en ce que* l'élément (46) est un tube qui part des éléments de maintien (50, 52) recevant la tige de piston (16).

6. Dispositif d'après la revendication n° 1, *caractérisé en ce que* une barre porte-buses (21, 23) part de chaque chambre (28, 30), un élément (62, 64), tel que vanne à poussoir, qui libère ou coupe l'arrivée de l'air comprimé, étant disposé entre la barre et la chambre.

7. Dispositif d'après la revendication n° 6, *caractérisé en ce que* les poussoirs des vannes (66, 68) sont reliés mécaniquement l'un à l'autre.

8. Dispositif d'après la revendication n° 5, *caractérisé en ce que*, dans un élément de maintien (50), un raccord (48) guidant le fluide est prévu entre l'élément conçu de préférence comme tube (46) et guidant le vérin et la section creuse (32) de la tige de piston (16).

12 54 52 16 34 38 76 74 68 72 22 64 36 21 20 66 62 70 50

23

56 46 60 44 30 40 26 42 24 41 28 32 18 58 48 14

10

EP 0 241 897 B1